## Europäisches Patentamt

## European Patent Office

(11) Publication number: **0 185 014**

## Office européen des brevets

**B1**

(12)

# EUROPEAN PATENT SPECIFICATION

(45) Date of publication of patent specification: **31.05.89**

(51) Int. Cl.⁴: **B 23 K 11/24**

(21) Application number: **84902642.2**

(22) Date of filing: **15.06.84**

(86) International application number:
**PCT/US84/00938**

(87) International publication number:
**WO 86/00035 03.01.86 Gazette 86/01**

(54) **RESISTANCE WELDER.**

(43) Date of publication of application:
**25.06.86 Bulletin 86/26**

(45) Publication of the grant of the patent:
**31.05.89 Bulletin 89/22**

(84) Designated Contracting States:
**AT BE CH DE FR GB LI LU NL SE**

(56) References cited:
**EP-A-0 019 747**
**EP-A-0 064 570**
**BE-A- 759 605**
**FR-A-1 443 797**

**Patent Abstracts of Japan, vol. 8, no. 140, 29
June 1984, page (M-305)(1577) & JP-A-5939484**

(73) Proprietor: **SQUARE D COMPANY**
**Executive Plaza**
**Palatine, IL 60067 (US)**

(72) Inventor: **JUREK, Dennis, Jon**
**395 Riverview Drive**
**Grafton, WI 53024 (US)**
Inventor: **GUETTEL, Marvin, A.**
**3751 North 99th Street**
**Milwaukee, WI 53222 (US)**

(74) Representative: **Baillie, Iain Cameron et al
c/o Ladas & Parry Isartorplatz 5
D-8000 München 2 (DE)**

## Description

Background of the invention

This invention relates to resistance welding. In particular, it relates to improvements in resistance welding that are appropriate for use with robot welders and automatic and press welders.

Resistance welding is a well-known way to join together two electrical conductors. It comprises passing an electrical current through the conductors in an amount sufficient to cause localized heating that melts the conductors, joining them together. This is normally accomplished by placing a pair of electrodes against the joined electrical conductors, applying pressure and an electrical voltage to the electrodes, and timing the $I^2R$ heating to an amount that is sufficient to weld the materials without creating excessive melting. This can be accomplished either by a DC or AC voltage in most applications. However, because of the typical junction resistance between two electrical conductors that are to be joined, it is normally desirable to reduce the voltage below the value of typical line voltages by a step-down transformer to apply voltages of the order of a few volts or tenths of a volt and currents of the order of thousands or tens of thousands of amperes. The simplest such arrangement comprises a step-down transformer, a switch to control the application of an electrical voltage to the step-down transformer, and a pair of electrodes connected electrically to the secondary winding of the step-down transformer. When the electrodes are placed on opposite sides of the workpieces to be joined, closing the switch applies a voltage across the junction of the electrical conductors and the resultant electrical heating melts the spot under the electrodes to weld the electrical conductors together.

Practical considerations of actual welding operations lead to the additions of various refinements to the process described above. In order to minimize the cost of transformers used to supply welding currents, it is desirable to insure that the peak voltage applied to the transformer from an electrical source places the core of the transformer in saturation, at or beyond the knee of the B-H curve of the core. Because of this fact, it is necessary to insure that the state of the core of the transformer is known whenever a voltage is applied to the transformer. If the last voltage that was applied to the transformer leaves the transformer magnetized in a particular direction and the next applied voltage causes current flow in the same direction, then the magnetizing current required by the transformer, together with the load current, may overload the transformer during the first cycle. This is an undesirable situation that is readily avoided by making certain that the control circuit for the welding transformer always applies full cycles of the input voltage to accomplish welding and that it always begins the application of voltage on that portion of the input voltage that goes in the same direction. This assures that the first cycle of applied voltage always encircles the origin of the hysteresis loop of the transformer core, avoiding a current that is far into saturation, and also assuring that the peak voltage is constant during each welding cycle. It then remains only to apply the welding voltage for a predetermined number of cycles of the input voltage to accomplish a weld. The predetermined number of cycles is determined by experience but is typically a number that is small enough that it must be controlled electronically because the necessary time period of application is too short to be controlled reliably by an operator.

The basic resistance welding system described above has serious disadvantages when it is applied to resistance welding in production lines. A production weld between two pieces of sheet steel, whether or not they are galvanized, typically requires a current of the order of 10,000 to 30,000 amperes. A transformer such as in EP—A1—64 750, EP—A1—19 747, BE—A—759 605, or JP—A—59-39484, that is wound to supply such currents in the secondary will typically weigh of the order of 90 to 270 kg (200 to 600 pounds) and will need to be cooled by water or other external cooling means. Electrical leads to carry such currents are substantial in size. The usual means to handle such problems as these in production lines in the automotive and other industries is to suspend transformers from an overhead support, to run insulated conductors to a welding head that includes watercooled electrodes, and to have an operator to place the electrodes at the stop to be welded and apply the external force to hold the electrodes in place while the weld is made. The system described above presents a number of problems when it is converted for use with robot or automatic welders. Robots are generally limited in the amount of weight that they can handle, and their operation is normally improved by reducing the amount of that weight. Automatic welders are limited in the closeness with which they can make adjacent welds, by the size of their transformers. Robot welders are also hampered greatly in operation by being connected to large electrical cables that are designed to handle welding currents of thousands of amperes, and the mobility of robots shortens the useful life of such large cables.

It is an object of the present invention to provide a method for resistance welding on electrically conductive workpiece that reduces the weight in the vicinity of the weld.

Accordingly, the present invention provides a method of welding an electrically conducting workpiece by resistance welding comprising the steps of: rectifying an AC voltage at a line frequency to produce a rectified voltage; inverting the rectified voltage at an operating frequency that is higher than the line frequency; transforming with a transformer the AC voltage to produce a step-down voltage; characterized by withdrawing the step-down voltage from a center tap of the transformer; rectifying the step-down voltage at the operating frequency to produce a multiphase DC voltage; and applying the multiphase DC voltage through welding contacts to the workpiece.

It is a further object of the present invention to provide an apparatus for welding an electrically conductive workpiece by resistance welding that reduces weight in the vicinity of the weld and is adaptable for use with a robot welding system.

The present invention further provides a resistance welding apparatus for welding an electrically conducting workpiece comprising: first means for rectifying an AC voltage at a line frequency to produce a rectified voltage; means for inverting the rectified voltage at an operating frequency that is higher than the line frequency to produce an AC voltage at an operating frequency; means for transforming the AC voltage at the operating frequency to a lower voltage to produce a step-down voltage; characterized by means for withdrawing the step-down voltage from a center tap of the transformer means; second means for rectifying the step-down voltage at the operating frequency to produce a multiphase DC voltage; and means for applying the DC multiphase voltage through welding contacts to the workpiece.

Other features will become apparent in the course of the following detailed description of the invention.

In the drawings
Fig. 1 is a block diagram of a circuit for the practice of the present invention.
Fig. 2 is a more detailed block diagram of the circuit for the practice of the present invention.
Fig. 3 is a circuit diagram that provides more detail about the operation of inverting units 44 and 46 of Fig. 2.
Fig. 4 is a detailed circuit diagram of the circuit for timer 48 of Fig. 2.
Fig. 5 is a detailed circuit diagram of drive circuit 52 of Fig. 2.
Fig. 6 is a cutaway perspective view of a step-down transformer that has been built and used for the practice of the present invention.
Fig. 7 is a set of time plots of voltage wave forms in the circuit of Fig. 4.

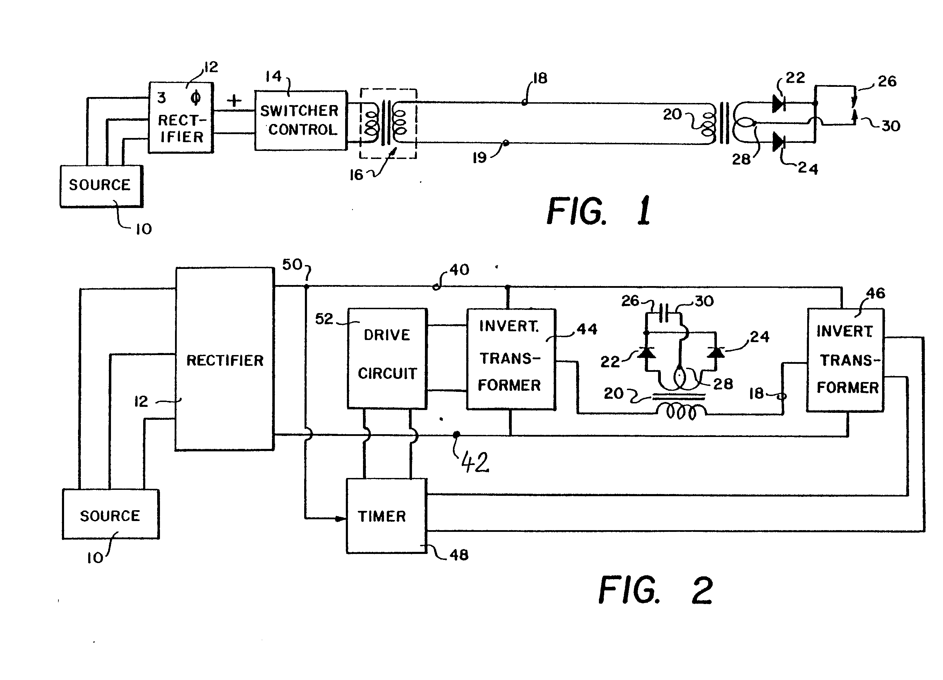

Detailed description of the invention
Fig. 1 is a block diagram of a circuit for the practice of the present invention. In Fig. 1 a source 10 of AC voltage is connected to a rectifier 12. The connection is shown here as being made with three leads which is most likely when source 10 is a source of three-phase AC voltage. However, electrical energy of any number of phases could be used. Rectifier 12 is connected to produce as an output a rectified voltage which is appropriately described as DC voltage with an AC component. The output of rectifier 12 is taken through control circuit 14, which is a controlled inverter, to transformer 16. Control circuit 14 is used to convert the output of rectifier 12 into an AC voltage at a frequency that is higher than the input frequency and with an RMS value that is controllable.

Transformer 16 is shown dotted here because it may be useful to change the voltage that is supplied to leads 18 and 19 as an input to step-down transformer 20. However, it should be understood that under some circumstances it might be desirable to connect leads 18 and 19 directly to control circuit 14. This is a matter of design choice.

Step-down transformer 20 has a secondary that is centertapped. The secondary leads of step-down transformer 20 are connected to rectifiers 22 and 24 to form a full-wave rectifier. A common connection from rectifiers 22 and 24 is taken to welding electrode 26. Center tap 28 of step-down transformer 20 is connected to welding electrode 30. When welding electrodes 26 and 30 are placed on opposite sides of a workpiece to be welded and control circuit 14 is operated to supply current through welding electrodes 26 and 30, a resistance weld may be effected between the pieces thus joined. When the frequency of the output voltage of control circuit 14 is higher than the frequency of source 10, then step-down transformer 20 can be made smaller and lighter than it could otherwise be. This facilitates its use by human operators and it also makes possible the placing of the transformer in the arm of a robot welder, thus freeing the arm for a wider range of motions. In addition, the smaller transformer makes it possible to make welds closer together in automatic welding machines.

Fig. 2 is a more detailed block diagram of the circuit for the practice of the present invention. In Fig. 2, rectifier 12 is connected to source 10 to supply voltage between bus leads 40 and 42. Inverting units 44 and 46 are connected between bus leads 40 and 42 and their midpoints are connected to leads 18 and 19 thence to step-down transformer 20. In the block diagram and circuit of Fig. 2, transformer 16 of Fig. 1 has been omitted. As stated, this is a matter of design choice. The balance of the circuit in Fig. 2 includes rectifiers 22 and 24 that are connected to the secondary winding of step-down transformer 20 to produce a full-wave-rectified output through welding electrodes 26 and 30, through a workpiece that is not shown, and back to center tap 28. Control of the circuit of Fig. 2 is initiated in timer 48, which both sets the frequency of operation of inverting units 44 and 46 and also controls relative timing to control the amplitude of the current flow through welding electrodes 26 and 30. A current-sensing element 50 is connected to supply an input to timer 48 to cut off operation of inverting units 44 and 46 if current in bus lead 40 exceeds a predetermined value.

Timer 48 produces two outputs that are taken to drive circuit 52, which is connected to drive power transistors or other switching elements in inverting units 44 and 46 so that current flows during a first half cycle through the upper portion of inverting units 44, through lead 18 and the primary of step-down transformer 20, through lead 19 to the lower half of inverting unit 46, thence to bus lead 42. The second half cycle sees current flow through the upper half of inverting unit 46, through lead 19 to the primary of step-down transformer 20, but flowing in the opposite direction. Current continues to flow through lead 19 to inverting unit 44 where it flows through the bottom half of inverting unit 44 to bus lead 42. Details of this control will become apparent from examining more detailed circuit diagrams. Acceptable switching elements for inverting unit 44 include thyristors, SCRs, gate-turnoff devices, and the like.

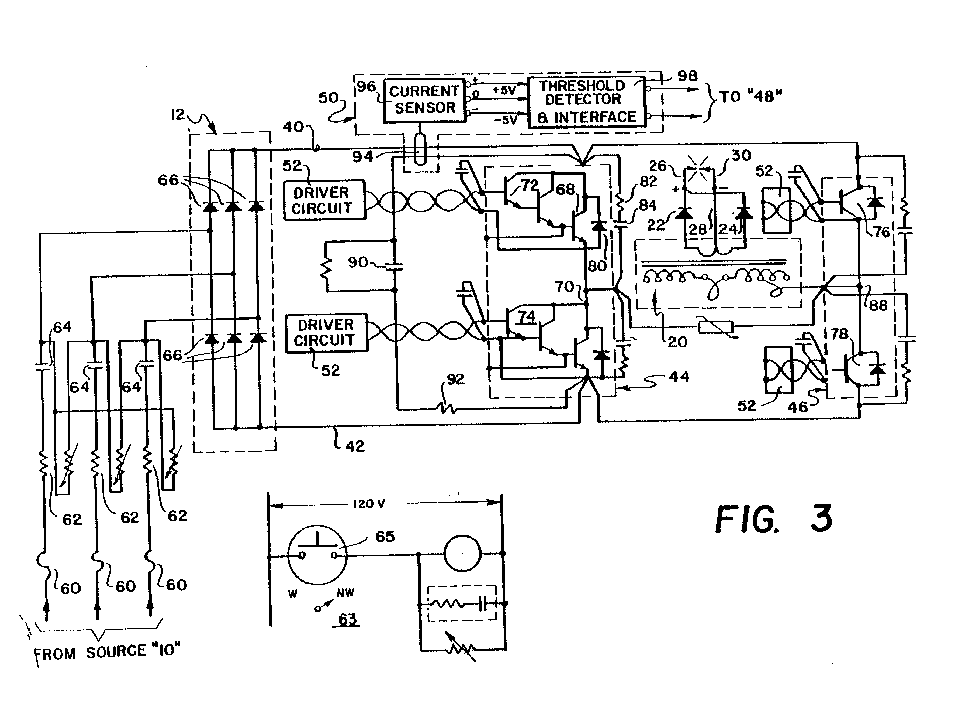

Fig. 3 is a circuit diagram that provides more detail about the operation of inverting units 44 and 46 of Fig. 2. In Fig. 3, AC power from source 10 is taken through three fuses 60, three limiting resistors 62 and three contacts 64 to rectifier 12. Source 10 is typically a three-phase source at a frequency of 60 Hz and a convenient power voltage such as 480 volts or the like. Contacts 64 are here shown as being energized by contact 63 under the control of pushbutton 65. This supposes that pushbutton 65 is operated as a part of the opening and closing of welding electrodes 26 and 30 before weld current is applied and after a weld is completed. In the alternative, contactor 63 may be controlled by timer 14 of Fig. 2.

In Fig. 3, rectifier 12 comprises an appropriate number of diodes 66 connected to form a full-wave bridge rectifier. Six diodes 66 are shown here, but it should be evident that that number may be changed according to the desired current to be handled, voltage to be applied to the diodes, and also to a different number of phases than three. These are matters of design choice. The output of rectifier 12 is a full-wave-rectified voltage that is positive at bus 40 with respect to bus 42. Inverting units 44 and 46 are connected between bus leads 40 and 42. Inverting units 44 and 46 are identical, so only one inverting unit 44 will be described. In inverting unit 44, a power transistor 68 is connected in series with another power transistor 70 which in turn is connected to a negative bus lead 42. Power transistor 68 is driven by a Darlington transistor array 72 which in turn is driven by drive circuit 52. Power transistor 70 is similarly driven by a Darlington transistor array 74 which is also driven by driver 52. Inverting unit 46 comprises power transistors 76 and 78 that are similarly driven by Darlington transistor arrays that are not shown here. Power transistor 68 is bypassed by a diode 80 and also by the series combination of resistor 82 and capacitor 84, which suppresses a rapid rate of rise of voltage across power transistor 68. This may be unnecessary with some choices of power transistor 68. Power transistors 70, 76 and 78 are similarly bypassed. The common point 86 between power transistors 68 and 70 is connected through lead 18 to one end of the primary winding of step-down transformer 20, and the common point 88 of power transistors 76 and 78 is connected through lead 19 to the other end of the primary winding of step-down transformer 20. A stabilizing capacitor 90 is connected through a resistor 92 between positive bus lead 40 and negative bus lead 42.

Current-sensing element 50 comprises a current transformer 94 that senses current flow in positive bus lead 40 and also in capacitor 90. This combined connection prevents false trips when capacitor 90 is charging, when the circuit is first energized. Current transformer 94 is connected to current sensor 96 which generates a signal that is proportional to the current measured. This signal is taken to comparator 98 where it is compared with a predetermined voltage. When current flow generates a signal that exceeds the predetermined level, the signal is taken to timer 48 of Fig. 2 to control operation of timer 48.

When the circuit of Fig. 3 was built and tested, the input voltage from source 10 was at a frequency of 60 Hz, and the timing circuit of timer 48 of Fig. 2 was operated so as to generate an input to step-down transformer 20 at 1200 Hz. Under these conditions it is appropriate to ignore the change from cycle to cycle of the voltage between bus leads 40 and 42, even though, as the conventional output of a full-wave three-phase bridge rectifier, it is known to have components of AC voltage at 360 Hz and multiples of that frequency. Operation of the circuit is well approximated by assuming that a DC voltage is applied between bus leads 40 and 42. An AC voltage is applied to step-down transformer 20 by first causing power transistors 68 and 78 to conduct, while power transistors 70 and 76 are not conducting. This generates one half-cycle of AC voltage to be applied to step-down transformer 20. Conditions are then changed so that power transistors 76 and 70 are caused to conduct, while power transistors 68 and 78 are switched off. This applies a voltage to step-down transformer 20 in the opposite direction, supplying the other half-cycle of AC voltage to step-down transformer 20. The voltage applied to the primary of step-down transformer 20 is essentially a square wave at 1200 Hz. The secondary of step-down transformer 20 responds to the square wave at 1200 Hz to produce what is substantially a square wave at 1200 Hz with a slight ripple that is full-wave rectified to be applied at welding electrodes 26 and 30.

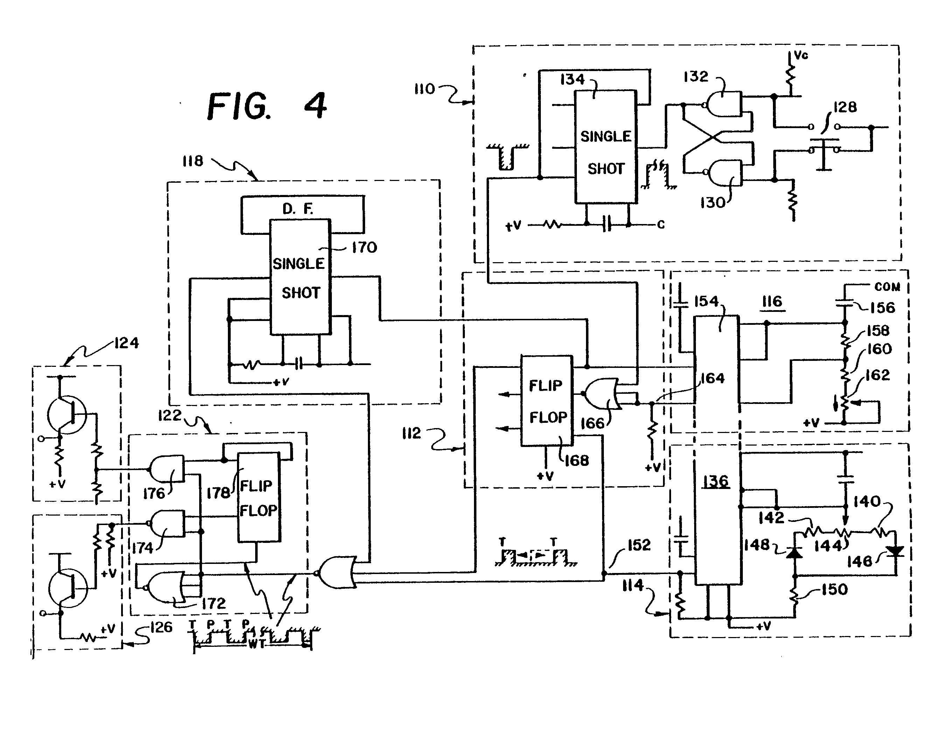

Fig. 4 is a detailed circuit diagram of the circuit for timer 48 of Fig. 2. In Fig. 4, a single-shot 110 generates a single rectangular pulse that is of the order of 1.6 milliseconds in duration. This pulse is taken to a weld memory circuit 112. A pulse generator 114 develops pulses at a predetermined frequency and of a width that is variable. These pulses are also taken as an input to weld memory circuit 112. A weld timer circuit 116 generates a rectangular pulse of variable duration that is connected to weld memory circuit 112 to enable a weld for a predetermined time. Weld memory circuit 112 is also disabled by a signal from current sensing elements 50 of Fig. 2 and Fig. 3 indicating the presence of an overcurrent.

An output signal from weld memory circuit 112 is taken to delayed firing circuit 118, a flipflop that delays its signal. The output of delayed firing circuit 118, the output of pulse generator 114, and the output of weld memory circuit 112 are taken through a NOR gate 120 to flipflop 112. Flipflop 122 generates two outputs that are rectangular waves of opposite signs. One of these is taken to drive transistor 124 and the other is taken to drive transistor 126. Outputs of drive transistors 124 and 126 represent the output of timer 48 which is taken as two inputs to drive circuit 52 of Fig. 2.

Considering the circuit of Fig. 4 in more detail, single-shot 110 includes a switch 128 which changes the state of the inputs to a pair of NAND gates 130 and 132. These are connected to form a flipflop that produces an output that is taken to single-shot 134. This is an anti-bounce circuit. Switch 128 is here indicated as a push button because that is the form in which it was used in the circuit that was built. It would also be possible to initiate the triggering of single-shot 110 with an electrical signal from another portion of the circuit or from a microprocessor used in a system of welding control. This is a matter of design choice and convenience.

Pulse generator 114 of Fig. 4 comprises a retriggerable and resettable monostable circuit that will be described for convenience as pulse generator 136. Capacitor 138 and a network that includes resistors 140 and 142, potentiometer 144 and diodes 146 and 148 is connected through resistor 150 to the positive voltage supply. The common point of diodes 146 and 148 is connected to pulse generator 136 so that one or the other of diodes 146 or 148 is switched into conduction according to the sign of the voltage applied at their common point. When diode 148 is switched into conduction, a resistance that is equal to the sum of the resistance of resistors 142 and the right-hand half of potentiometer 144 is connected in series with capacitor 138 to determine one pulse time. When diode 146 is switched into conduction, the resistance that determines the period of the opposite half of the pulse is that of the sum of resistor 140 and the remaining portion of potentiometer 144. The result is that a change in the setting of potentiometer 144 changes the relative length of the pulses without changing the value of their sum. This produces at output terminal 152 a square wave at constant frequency which here is 1200 Hz and having periods of conduction of each sign that can be varied by varying the setting of potentiometer 144.

Weld-time timer 116 uses a single-shot 154. Capacitor 156 is connected in series with resistor 158 and they both are connected to single-shot 154. The sum of the resistance of resistor 158 and resistor 160 and variable resistor 162 combines with the value of capacitor 156 to determine the period of weld time. The resistance that is selected by adjusting the setting of variable resistor 162 thus adjusts the length of time that the welder stays on. It should be evident that this function may be controlled on an analog basis by adjusting resistance and corresponding RC times in a single-shot as shown here. In the alternative a microprocessor could be used to control weld time either according to a predetermined schedule of times or in response to various other items of information such as measurements of weld quality or the like. These are matters of design choice that will vary according to the use that is contemplated for the circuit. In the weld-time timer 116 as shown, that result is a rectangular pulse at output terminal 164 that is equal in duration to the length of the desired weld, typically seconds or fractions of a second.

Signals from single-shot 110, pulse generator 114 and weld-timer 116 are all taken to weld memory circuit 112. The output of single-shot 110 is applied as one input to NOR gate 166 and the signal from output terminal 164 of weld-time timer 116 is applied as the other input to NOR gate 166. The output of NOR gate 166 is taken as an input to the D terminal of flipflop 168, which is clocked by the signal from terminal 152. Flipflop 168 can be reset by a signal from current sensing element 50 of Fig. 2 in case of an overload. The NOT-Q output of flipflop 168 is taken as a reset signal to single shot 154 and also as an input to delayed firing circuit 118, where it is applied to a single shot 170. The output of single shot 170 is taken to NOR gate 120 where it is applied as one input. Other inputs to NOR gate 120 are taken from terminal 152, the output of pulse generator 114, and the Q output of flipflop 168. The output of NOR gate 120 is taken as an input to flipflop 122 where it is applied to inverter 172 and as one input to each of NAND gates 174 and 176. The output of inverter 172 is taken as a clocking input to flipflop 178 which provides opposite-going outputs that are taken respectively as inputs to NAND gates 174 and 176. The result is to produce two equal and opposite rectangular wave forms that are taken as inputs to drive transistors 124 and 126. Referring again to the three inputs to NOR gate 120, the input from delayed-firing circuit 118 causes the first pulse in any welding interval to be of a shorter pulse width than the succeeding pulses. This prevents saturation of the core of step-down transformer 20 of Fig. 1 at the start of a weld. The input to NOR gate 120 from weld memory unit 112 determines the total time that rectangular pulses are allowed to appear at the output of NOR gate 120. This is the length that is determined for a single weld. The input to NOR gate 120 from terminal 152 causes all but the first pulse of any one weld cycle to be rectangular pulses at a fixed frequency and of a length that is determined by the setting of potentiometer 144.

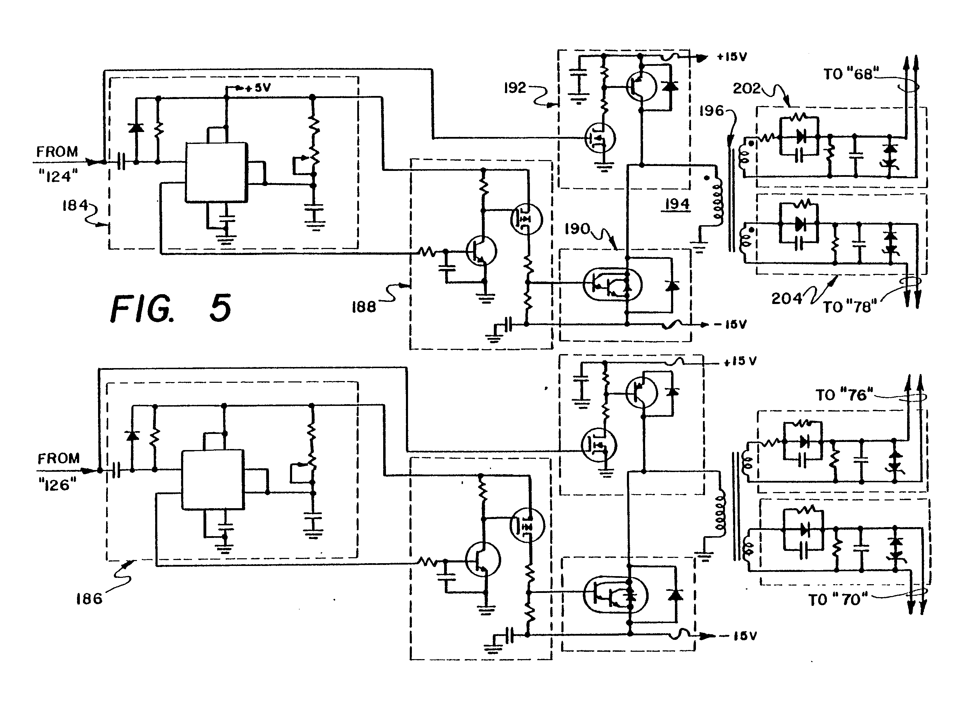

Fig. 5 is a detailed circuit diagram of drive circuit 52 of Fig. 2. In Fig. 5, a timer 184 receives as an input a signal from drive transistor 124 of Fig. 4. An identical timer 186 receives an equivalent signal from drive transistor 126. Since the circuits in which timers 184 and 186 are used are identical, only that associated with timer 184 will be described in detail.

Timer 184 produces a pulse that is taken to power amplifier 188 of Fig. 5 where it is used to drive negative-going amplifier 190. The input pulse from drive transistor 124 is also taken to a positive-going amplifier 192. Negative-going amplifier 190 and positive-going amplifier 192 are both connected to primary 194 of transformer 196 with one portion of a cycle of current being supplied by each of these amplifiers. Transformer 196 has a secondary winding 198 and a secondary winding 200. Secondary winding 198 is connected to a shaping circuit 202 and secondary winding 200 is connected to a shaping circuit 204. Shaping circuit 202 is connected to the circuit of Fig. 3 to trigger conduction of power transistor 68. Shaping circuit 204 is connected to the circuit of Fig. 3 to trigger conduction of power transistor 78. The corresponding shaping circuits of the identical portion of Fig. 5 are similarly connected as indicated, one to trigger the conduction of power transistor 76 in Fig. 3 and the other, to trigger the conduction of power transistor 70 of Fig. 3.

The circuit of Fig. 4 that supplied inputs to timers 184 and 186 were described as being opposite in sense. It therefore follows that the voltages to transformer 196 and its symmetrical equivalent in Fig. 5 will be opposite in phase. Referring to the outputs of shaping circuits 202 and 204, in connection with the circuit of Fig. 3, it can be seen that when pulse shaping circuits 202 and 204 produce currents that will cause transistors 68 and 78 to conduct. Conduction through step-down transformer 20 of Fig. 3 will be from left to right. The opposite is true when the input polarity is reversed so that the inputs to Fig. 3 will turn on power transistors 70 and 76, causing current flow from right to left through step-down transformer 20 of Fig. 3. The result of this operation will be the application to step-down transformer 20 of Fig. 3 of a square wave of current at a frequency determined by pulse generator 114 of Fig. 4. The RMS value of the current in step-down transformer 20 of Fig. 3 will be determined by the setting of potentiometer 144 of Fig. 3. The number of such pulses, representing the length of a weld, will be determined by the setting of variable resistor 162 of Fig. 4.

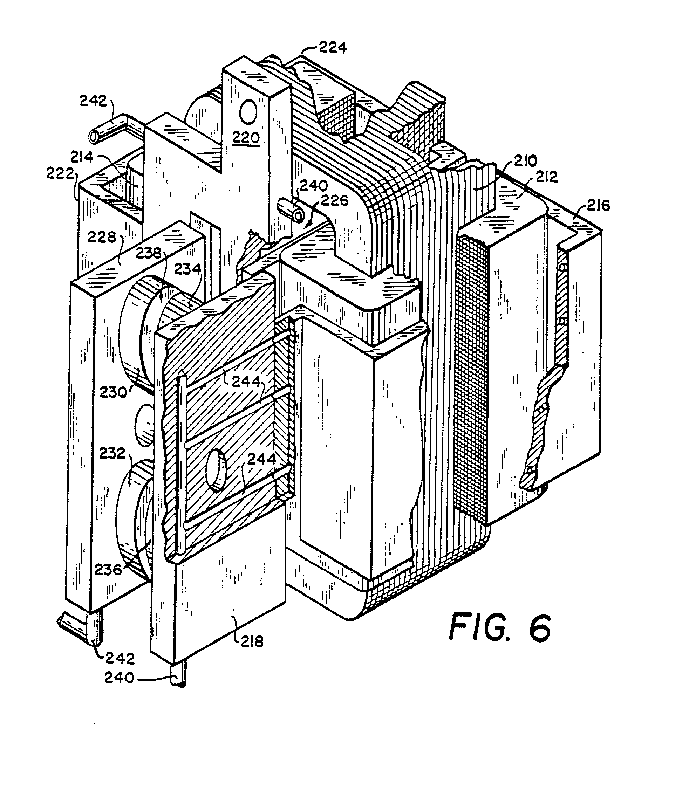

Fig. 6 is a cutaway perspective view of step-down transformer 20 that has been built and used for the practice of the present invention. In Fig. 6, ferromagnetic core 210 is enclosed by a primary winding 212 and another primary winding 214 that are connected together. A secondary winding 216 begins from a terminal 218. Secondary winding 216 is a single thickness of a water-cooled electrical conductor, placed to enclose primary winding 212 and an associated core 210. Secondary winding 216 continues to center terminal 220 which will comprise a center tap of the secondary winding 216. In order to keep the winding sense of the secondary in the proper direction, secondary winding 216 is next taken around primary winding 214 in a direction to corner 222, then to corner 224, through window 226 to terminal 228, completing secondary winding 216.

Resistance welding of sheet metal of gauges in common use in the automotive industry typically takes currents of the order of 10,000 or 20,000 amperes. While the circuit in Fig. 3 shows two rectifiers 22 and 24, the realization of that circuit that was built using the transformer of Fig. 6 shows four, the number necessary to carry the desired current. In Fig. 6, diode 230 was used in parallel with diode 232 to carry the necessary amount of current. These two diodes in parallel form the equivalent of diode 22 of Fig. 3. Similarly, in Fig. 6, diode 234 is placed in parallel with diode 236 to effect the equivalent of rectifier 24 of Fig. 3. A common connection among diodes 230, 232, 234, and 236 is not shown in Fig. 6 but will be made by clamping an electrical conductor in the space 238 that now separates them. A plurality of inlets 240 and outlets 242 carry cooling water that is passed internally through ducts 244 in secondary winding 216.

The transformer of Fig. 6 is one that has been built and tested for use in the circuit of Fig. 3. It is shown here for certain of its features rather than as a necessary way to build a transformer. Those features include a secondary winding that has two turns with a center tap that is available for a connection. It has means for placing rectifying semiconductors in a water-cooled terminal attached to the transformer that allows them to be clamped readily to the common terminal. One feature however that represents a particular feature of the present invention is the fact that the use of a frequency above the line frequency to be applied to the primary of the transformer of Fig. 6 allows the use of less iron in core 210 that will be necessary at a lower frequency. The smaller amount of iron, and hence the smaller amount of copper required, reduces the weight of the transformer of Fig. 6 and makes it easier to locate the transformer of Fig. 6 in a robot arm or in an automatic welder.

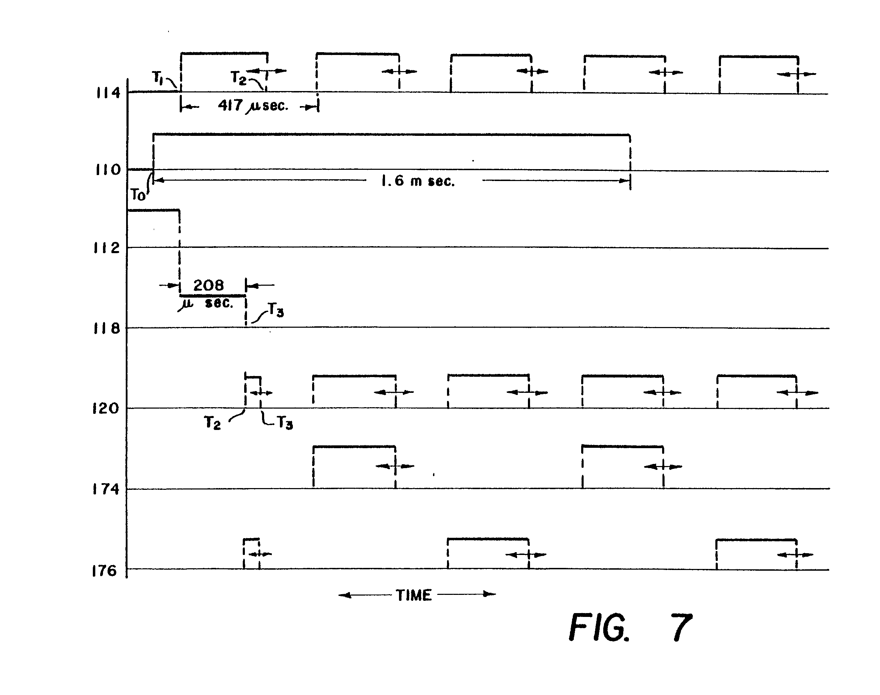

Fig. 7 is a set of time plots of voltage wave forms in the circuit of Fig. 4. Each of the wave forms is identified at an appropriate place in the abscissa by the element number of the item of equipment in Fig. 4 of which the wave form represents the output. Referring to Fig. 7, the wave form marked "114" is a rectangular wave that is generated by the free-running pulse generator 114. That wave form begins its rise at a time marked $T_1$ and repeats with a period of 417 microseconds. The time of fall of this rectangular wave form is indicated by arrows as being variable, since that time can be set by adjusting potentiometer 144 of Fig. 4. A second wave form that is shown in Fig. 7 is that of single-shot 110 marked as "110", which is a rectangular wave of 1.6 milliseconds in duration. That rectangular pulse is shown as starting at time $T_0$ in Fig. 7, a time that is determined by operating switch 128 of Fig. 4 and that can equally as well be determined by other signals or by programming, as has been described.

After time $T_0$, time $T_1$ is determined as the first occurrence of a rise in the rectangular wave form of pulse generator 114. This sets the time of the rectangular pulse marked "112", which is the output of weld memory circuit 112. This is a single rectangular pulse that begins at time $T_1$ and continues to the end of the weld, a time measured typically in tenths of a second or seconds. Time $T_1$

is also the starting time of the wave form marked "118". This is a single rectangular pulse that begins at $T_1$ and ends after 208 microseconds. This is the output of delayed firing circuit 118 which causes or may cause the first pulse in a weld cycle to be of shorter duration than the rest of the pulses.

Consider now the wave form in Fig. 7, marked "120", which is the output of NOR gate 120. This is the negation of the logical union of wave forms "112", "114" and "118" of Fig. 7. Time $T_2$ is seen as the fall time of the rectangular wave representing the output of pulse generator 114, while time $T_3$ is defined as the time of fall of the rectangular pulse that is the output of delayed firing circuit 118. If time $T_2$ occurs before time $T_3$ as shown here, then the wave form marked "120" begins at time $T_3$ and thereafter is the negation of wave form "114". If time $T_2$ is selected to be later than $T_3$ then the wave form "120" will be the negation of wave form "114". Wave form "120" is then the source of the wave forms marked "174" and "176" which are respectively the outputs of NAND gates 174 and 176 of Fig. 4. As can be seen, wave form "174" comprises alternate pulses selected from "120", and wave form "176" comprises the remaining pulses of wave form "120". These switch inverting units 44 and 46 alternately to produce the output square wave as desired.

## Claims

1. A method of welding an electrically conducting workpiece by resistance welding comprising the steps of: rectifying an AC voltage at a line frequency to produce a rectified voltage; inverting the rectified voltage at an operating frequency that is higher than the line frequency to produce an AC voltage at the operating frequency; transforming with a transformer (20) the AC voltage at the operating frequency to a lower voltage to produce a step-down voltage; characterized by withdrawing the step-down voltage from a center tap (28) of the transformer (20); rectifying the step-down voltage at the operating frequency to produce a multiphase DC voltage; and applying the multiphase DC voltage through welding contacts (26, 30) to the workpiece.

2. A resistance welding apparatus for welding an electrically conducting workpiece comprising: first means (12) for rectifying an AC voltage at a line frequency to produce a rectified voltage; means (14; 44, 46) for inverting the rectified voltage at an operating frequency that is higher than the line frequency to produce an AC voltage at the operating frequency; means (20) for transforming the AC voltage at the operating frequency to a lower voltage to produce a step-down voltage; characterized by means for withdrawing the step-down voltage from a center tap (28) of the transformer means (20); second means (22, 24) for rectifying the step-down voltage at the operating frequency to produce a multiphase DC voltage; and means for applying the DC multiphase voltage through welding contacts (26, 30) to the workpiece.

3. The apparatus of claim 2, where the means for transforming comprises a step-down transformer which produces the step-down voltage at a pair of secondary terminals, each of the secondary terminals of the step-down transformer (20) also connected to one of the pair of welding electrodes (26) characterized in that the center tap (28) of said step-down transformer (20) is connected to the other of the pair of welding electrodes (30).

4. The apparatus of claim 3, characterized by a full-wave rectifier (22, 24) being connected to the secondary terminals of the step-down transformer (20), to the center tap (28), and to the welding electrodes (26, 30) to recitfy the output voltage of the step-down transformer (20) and apply a rectified output voltage to the welding electrodes (26, 30).

5. The apparatus of claim 4, characterized in that the means for inverting comprises: a timer circuit (48) monitoring the primary circuit and producing the rectangular pulses of a controllable width at the operating frequency; and a plurality of semiconducting devices (76, 78) connected to the timer circuit (48) and the step-down transformer (20) to switch current through the step-down transformer (20) in alternating direction at the operating frequency.

6. The apparatus of claim 4, characterized in that the step-down transformer (20) comprises: a ferromagnetic core (210); a primary winding (212, 214) enclosing the ferromagnetic core (210) and a secondary winding (216) formed of a single water-cooled electrical conductor wound in two turns in the same direction about the ferromagnetic core (210).

7. The apparatus of claim 6 characterized in that the center tap (28) of the step-down transformer (20) is at a junction of the two turns.

## Patentansprüche

1. Verfahren zum Schweißen eines elektrisch leitenden Werkstückes durch Widerstandsschweißung mit folgenden Schritten: zum Erzeugen einer Richtspannung wird eine auf der Netzfrequenz befindliche Wechselspannung gleichgerichtet; zum Erzeugen einer Wechselspannung auf einer Arbeitsfrequenz, die höher ist als die Netzspannung, wird die Richtspannung auf der Arbeitsspannung invertiert; zum Erzeugen einer herabtransformierten Spannung wird die Wechselspannung auf der Arbeitsfrequenz mit einem Transformator (20) auf eine niedrigere Spannung transformiert; dadurch gekennzeichnet, daß die abwärtstransformierte Spannung von einem Mittelabgriff (28) des Transformators (20) angegriffen wird, daß zum Erzeugen einer mehrphasigen Gleichspannung die abwärttransformierte Spannung auf der Arbeitsfrequenz gleichgerichtet wird, und daß die mehrphasige Gleichspannung über Schweißkontakte (26, 30) an das Werkstück angelegt wird.

2. Widerstandsschweißvorrichtung zum Schweißen eines elektrisch leitenden Werkstückes mit einer ersten Einrichtung (12) zum Erzeugen einer Richtspannung durch Gleichrichten einer auf einer Netzfrequenz befindlichen Wechselspannung; mit einer Einrichtung (14; 44, 46) zum Erzeugen einer Wechselspannung auf einer Arbeitsfrequenz, die höher ist als die Netzfrequenz, durch Invertieren der Richtspannung auf der Arbeitsfrequenz; mit einer Einrichtung (20) zum Erzeugen einer abwärtstransformierten Spannung durch Transformieren der Wechselspannung auf der Arbeitsfrequenz auf eine niedrigere Spannung, gekennzeichnet, durch eine Einrichtung zum Abgreifen der abwärtstransformierten Spannung von einem Mitelabgriff (28) der Transformiereinrichtung (20); durch eine zweite Einrichtung (22, 24) zum Erzeugen einer mehrphasigen Gleichspannung durch Gleichrichten der abwärtstransformierten Spannung auf der Arbeitsfrequenz und durch eine Einrichtung zum Anlegen der mehrphasigen Gleichspannung über Schweißkontakte (26, 30) an das Werkstück.

3. Vorrichtung nach Anspruch 2, dadurch gekennzeichnet, daß die Transformiereinrichtung einen Abwärtstransformator umfaßt, der eine abwärtstransformierte Spannung an einem Paar von Sekundäranschlüssen erzeugt, wobei jeder der Sekundäranschlüsse des Abwärtstransformators (20) auch mit einem dar beiden Schweißelektroden (26) verbunden ist, dadurch gekennzeichnet, daß der Mittelabgriff (28) des Abwärtstransformators (20) mit der anderen der beiden Schweißelektroden (30) verbunden ist.

4. Vorrichtung nach Anspruch 3, gekennzeichnet durch einen Vollwellengleichrichter (22, 24), der mit den Sekundäranschlüssen des Abwärtstransformators (20), mit dem Mittelabgriff (28) und mit den Schweißelektroden (26, 30) verbunden ist und dazu dient, die Ausgangsspannung des Abwärtstransformators (20) gleichzurichten und eine Ausgangs-Richtspannung an die Schweißelektroden (26, 30) anzulegen.

5. Vorrichtung nach Anspruch 4, dadurch gekennzeichnet, daß die Invertiereinrichtung umfaßt: eine Zeitgeberschaltung (48) zum Überwachen des Primärkreises und zum Erzeugen von Rechteckimpulsen einer steuerbaren Breite auf der Arbeitsfrequenz, und durch eine Mehrzahl von Halbleitereinrichtungen (76, 78), die mit der Zeitgeberschaltung (48) und dem Abwärtstransformator (20) verbunden sind und dazu dienen, einen Strom durch den Abwärtstransformator (20) auf der Arbeitsfrequenz in wechselnden Richtungen zu schalten.

6. Vorrichtung nach Anspruch 4, dadurch gekennzeichnet, daß der Abwärtstransformator (20) einen ferromagnetischen Kern (210); eine den ferromagnetischen Kern (210) umschließende Primärwicklung (212, 214) und eine Sekundärwicklung (216) besitzt, die aus einem einzigen wassergekühlten elektrischen Leiter (216) besteht, der in zwei Windungen in derselben Richtung um den ferromagnetischen Kern (210) gewickelt ist.

7. Vorrichtung nach Anspruch 6, dadurch gekennzeichnet, daß sich der Mittelabgriff (28) des Abwärtstransformators (20) am Übergang zwischen zwei Windungen befindet.

**Revendications**

1. Un procédé de soudage d'une pièce électriquement conductrice par soudage par résistance, comprenant les étapes consistant à: redresser une tension alternative à une fréquence de ligne pour produire une tension redressée; assurer l'ondulation de la tension redressée à une fréquence de service qui est supérieure à la fréquence de ligne pour produire une tension alternative à la fréquence de service; transformer au moyen d'un transformateur (20) la tension alternative à la fréquence de service pour obtenir une tension inférieure afin de produire une tension abaissée; caractérisé en ce qu'on extrait la tension abaissée d'une prise centrale (28) du transformateur (20); en ce qu'on redresse la tension abaissée à la fréquence de service pour produire une tension continue multiphasée; et en ce qu'on applique la tension continue multiphasée à la pièce par l'intermédiaire de contacts de soudage (26, 30).

2. Un appareil de soudage par résistance pour souder une pièce électriquement conductrice, comprenant: un premier moyen (12) pour redresser une tension alternative à une fréquence de ligne afin de produire une tension redressée; un moyen (14; 44, 46) pour produire une ondulation de la tension redressée à une fréquence de service qui est supérieure à la fréquence de ligne afin de produire une tension alternative à la fréquence de service; un moyen (20) pour transformer la tension alternative à la fréquence de service en une tension inférieure de manière à produire une tension abaissée; caractérisé par un moyen pour extraire la tension dévoltée d'une prise centrale (28) du moyen transformateur (20); un second moyen (22, 24) pour redresser la tension abaissée à la fréquence de service afin de produire une tension continue multiphasée; et un moyen pour appliquer à la pièce la tension continue multiphasée par l'intermédiaire de contacts de soudage (26, 30).

3. L'appareil selon la revendication 2, dans lequel le moyen transformateur comprend un transformateur abaisseur qui produit la tension abaissée à une paire de bornes du secondaire, chacune des bornes du secondaire du transformateur abaisseur (20) étant également reliée à l'une des deux électrodes de soudage (26), caractérisé en ce que la prise centrale (28) dudit transformateur abaisseur (20) est reliée à l'autre électrode de soudage (30) de la paire.

4. L'appareil selon la revendication 3, caractérisé par un redresseur en double alternance (22, 24) qui est relié aux bornes du secondaire du transformateur abaisseur (20), à la prise centrale (28) et aux électrodes de soudage (26, 30) pour redresser la tension de sortie du transformateur abaisseur (20) et pour appliquer une tension de sortie redressée aux électrodes de soudage (26, 30).

5. L'appareil selon la revendication 4, caractérisé en ce que le moyen onduleur comprend: un circuit de base de temps (48) contrôlant le circuit primaire et produisant les impulsions rectangulaires d'une largeur commandable la fréquence de service; et une pluralité de dispositifs semiconducteurs (76, 78), reliés au circuit de base de temps (48) et au transformateur abaisseur (20) pour commuter le courant traversant le transformateur abaisseur (20) dans des sens alternés à la fréquence de service.

6. L'appareil selon la revendication 4, caractérisé en ce que le transformateur abaisseur (20) comprend: un noyau ferromagnétique (210); un enroulement primaire (212, 214) entourant le noyau ferromagnétique (210) et en enroulement secondaire (216) formé d'un conducteur électrique unique refroidi par eau et enroulé sous forme de deux spires dans la même direction autour du noyau ferromagnétique (210).

7. L'appareil selon la revendication 6, caractérisé en ce que la prise centrale (28) du transformateur abaisseur (20) est située à une jonction des deux spires.

FIG. 1

FIG. 2

EP 0 185 014 B1

FIG. 3

FIG. 4

EP 0 185 014 B1

FIG. 5

4

FIG. 6

FIG. 7

EP 0 185 014 B1